# EUROPÄISCHE PATENTSCHRIFT

(11) **EP 3 635 346 B1**
(45) Veröffentlichungstag und Bekanntmachung des Hinweises auf die Patenterteilung: **23.11.2022**
(21) Anmeldenummer: 18723807.6
(22) Anmeldetag: 08.05.2018
(51) Int. Cl.: G01F 1/684

(54) **THERMISCHES DURCHFLUSSMESSGERÄT**
THERMAL FLOWMETER
DÉBITMÈTRE THERMIQUE

(30) Priorität: 08.06.2017 DE 102017112622
(43) Veröffentlichungstag der Anmeldung: 15.04.2020
(73) Patentinhaber: Endress+Hauser Flowtec AG, 4153 Reinach (CH)
(72) Erfinder: GABERTH EL, Stephan, 4104 Oberwil (CH)
(74) Vertreter: Penner, Paul
(86) Internationale Anmeldenummer: PCT/EP2018/061862
(87) Internationale Veröffentlichungsnummer: WO 2018/224233

(56) Entgegenhaltungen:
- EP-A1- 0 943 899
- WO-A2-2005/064285
- DE-A1- 19 719 010
- DE-A1-102007 010 912
- DE-A1-102015 118 125

## Beschreibung

Die vorliegende Erfindung betrifft ein thermisches Durchflussmessgerät nach dem Oberbegriff des Anspruchs 1.

Am Markt werden Insertions- bzw. Einsteckgeräte meist mit einem Schutzbügel ausgerüstet.

Der Schutzbügel hat die Aufgabe, die filigranen Temperaturfühler vor Beschädigung zu schützen. Beispielsweise könnte der Sensor bei unsachgemäßem Einfüllen in die Rohrleitung beschädigt werden. Des Weiteren kann der Schutzbügel auch noch die Aufgabe haben, die Strömung zu konditionieren. So kann die Messgenauigkeit verbessert werden. Bei Einsteckgeräten wird das Sensorrohr durch eine Verschraubung festgehalten. Bei Überdruck im Prozess darf die Verschraubung nicht gelöst werden. Wird trotzdem irrtümlich die Verschraubung gelöst, so wird der Sensor ohne Vorwarnung aus der Rohrleitung herausschießen. Zur Sicherheit besitzen die meisten Sensoren am Sensorende (sensorseitig) eine Durchmessererweiterung, beispielsweise einen Anschlag. Diese Durchmessererweiterung bewirkt, dass der Sensor nicht aus der Verschraubung austreten kann und so nicht komplett aus der Rohrleitung hinausschießt. Diese Durchmessererweiterung wird meist durch ein Anschweißstück oder durch Umformung eines Rohres erreicht. Die Durchmessererweiterung hat den Nachteil, dass ein zusätzliches Teil angeschweißt werden muss oder das Rohr umgeformt werden muss, dies verteuert die Konstruktion. Nachteilig ist auch, dass die Verschraubung nun nur noch von einem Ende (elektronikseitig) auf das Sensorrohr geschoben werden kann. Dies führt dazu, dass man dort, wo die Elektronik befestigt wird, eine lösbare Verbindung vorsehen muss. Möchte man hingegen eine Schweißverbindung bereitstellen, so müssen die innenliegenden Kabel bzw. Daten- und/ oder Energieleitungen aufwendig vor Hitze geschützt werden.

DE 10 2015 118 125 A1 beschreibt ein thermisches Durchflussmessgerät, das einen Schutzbügel umfasst, der dem Stand der Technik entspricht.

Die Erfindung setzt daher bei der Aufgabe an, ein thermisches Durchflussmessgerät bereitzustellen, bei welchem die Sensorelemente in ausreichendem Maße vor mechanischer Beschädigung geschützt sind und welches einfacher und unkomplizierter herstellbar ist.

Die vorliegende Erfindung löst diese Aufgabe durch ein thermisches Durchflussmessgerät mit den Merkmalen des Anspruchs 1.

Ein erfindungsgemäßes thermisches Durchflussmessgerät umfasst zumindest einen Messaufnehmer mit einer Sensoranordnung zur Ermittlung eines Messwertes zur Ermittlung des Durchflusses eines Mediums; mit einem Messumformer zur Ermittlung des Durchflusses anhand des ermittelten Messwertes; ein rohrförmiges Verbindungselement zur Verbindung der Sensoranordnung mit dem Messumformer, wobei eine Schutzhülse vorgesehen ist, welche mit dem rohrförmigen Verbindungselement mechanisch verbunden ist und wobei die Schutzhülle einen Hülsenmantel mit mindestens zwei Öffnungen aufweist. Eine dieser Öffnungen ist eine Einströmöffnung, durch welche das Medium der Sensoranordnung zuleitbar ist und die andere Öffnung ist eine Abströmöffnung, durch welche das Medium von der Sensoranordnung ableitbar ist.

Die mechanische Verbindung zwischen der Schutzhülse und dem rohrförmigen Verbindungselement ist dabei als eine formschlüssige Verbindung ausgestaltet, welche das Verbindungselement vollumfänglich umschließt oder es kann sich um eine bereichsweise formschlüssige Verbindung handeln, z.B. umfangsverteilte Vorsprünge beispielsweise in Form von Rastnasen, welche in eine Ringnut eingreifen.

Die Verbindung kann dabei ausschließlich mechanisch erfolgen oder zusätzlich durch eine Schweißverbindung, vorzugsweise durch Schweißpunkte, verstärkt werden, Gemäß der Erfindung weist die Schutzhülse bereichsweise ein umlaufendes Ringsegment auf, wobei die Schutzhülse ausgehend von dem umlaufenden Ringsegment zumindest zwei Schenkel aufweist, wobei jeder der Schenkel eine Längsachse aufweist, die parallel zu einer Längsachse der Schutzhülse verlaufen, wobei jeder der Schenkel einen schalenförmigen Endabschnitt aufweist und wobei die Endabschnitt durch parallel zur Längsachse verlaufende Schlitze voneinander getrennt sind.

Vorteilhafte Ausgestaltungen der Erfindung sind Gegenstand der Unteransprüche.

Die Sensorhülse weist vorteilhaft zumindest im Bereich der formschlüssigen Verbindung, also einer Verbindung in welcher die Sensorhülse und dem Verbindungselement in Eingriff gebracht werden, einen Innendurchmesser auf, der kleiner ist als der Außendurchmesser des rohrförmiges Verbindungselements.

Das umlaufende Ringsegment kann vorteilhaft endständig angeordnet sein. Das Ringsegment ermöglicht die einstückige monolithische Ausgestaltung der Schutzhülse.

Die Schutzhülse und das rohrförmige Verbindungselement sind vorzugsweise zwei, insbesondere unmittelbar, miteinander verbundene Bauteile.

Die mechanische Verbindung zwischen der Schutzhülse und dem rohrförmigen Verbindungselement dient vorteilhaft der axialen Fixierung der Schutzhülse gegenüber dem Verbindungselement. Als axiale Fixierung ist die Fixierung der Verschieblichkeit der Schutzhülse entlang der Längsachse des Verbindungselements zu verstehen. Die Fixierung kann in einem Bereich erfolgen in welchem keine stoffschlüssige sondern nur eine formschlüssige Verbindung erfolgt. Eine zusätzliche stoffschlüssige Verbindung zwischen der Schutzhülse und dem Verbindungselement kann an anderer Stelle bzw. einem Bereich, in welchem die Schutzhülse mit dem rohrförmigen Verbindungselement durch Eingriff miteinander verbunden ist, erfolgen.

Ein erstes der Bauteile kann eine Vertiefung oder Ausnehmung aufweisen und ein zweites der Bauteile kann einen Vorsprung aufweisen, wobei die lösbare Verbindung der beiden Bauteile durch Eingriff des Vorsprunges in die Vertiefung erfolgt. Es kann sich beispielsweise um eine Bajonett- oder eine Rastverbindung handeln.

Das rohrförmige Verbindungselement des Thermischen Durchflussmessgerät kann ein ringförmiges Anschlusselement mit einem Innendurchmesser zur Befestigung, insbesondere mediendichten Befestigung, des Thermischen Durchflussmessgerätes an der Rohrwand eines Rohres, beispielsweise eines Messrohres, aufweisen, wobei der Außendurchmesser der Schutzhülse größer ist als der Innendurchmesser des Anschlusselements.

Das ringförmige Anschlusselement kann in einem gelösten Zustand eine axiale Verschieblichkeit des rohrförmigen Verbindungselements gegenüber dem Rohr entlang einer Längsachse A des rohrförmigen Verbindungselementes ermöglichen.

Die Schutzhülse bzw. die Hülsenwandung der Schutzhülse kann in einem endständigen Bereich eine Fase aufweisen, so dass die Schutzhülse im Verlauf der Längsachse zur Schützhülsen-Mitte hin in ihrAußendurchmesserzunimmt. Dadurch wird ein Auflaufen des Anschlusselements auf die Hülsenwandung beim Herausschießen des Thermischen Durchflussmessgerätes ermöglicht.

Erfindungsgemäß weist die Schutzhülse ausgehend von dem umlaufenden Ringsegment zumindest zwei Schenkel auf, wobei jeder der Schenkel eine Längsachse aufweist. Die Längsachsen können parallel zur Längsachse A der Schutzhülse verlaufen, wobei jeder der Schenkel einen schalenförmigen Endabschnitt aufweist, wobei die Endabschnitte durch zumindest einen, insbesondere zwei, parallel zur Längsachse A verlaufende Schlitze von einander getrennt sind. Somit kann eine Aufspreizung der Schenkel erfolgen, so dass ein Überstülpen der Schutzhülse über den Messaufnehmer bei der Installation der Schutzhülse möglich ist.

Nachfolgend wird die Erfindung anhand mehrerer Ausführungsbeispiele unter Zuhilfenahme der beiliegenden Zeichnungen näher erläutert. Die Zeichnungen enthalten dabei auch mehrere Merkmale, welche für sich genommen in naheliegender Weise mit anderen nicht dargestellten Ausführungsbeispielen kombinierbar sind. Die Ausführungsbeispiele in ihrer Gesamtheit sind dabei keineswegs beschränkend für den Schutzumfang der vorliegenden Erfindung zu verstehen.

Es zeigen:
- Fig. 1:: Perspektivansicht einer Schutzhülse eines thermischen Durchflussmessgerätes.
- Fig. 2:: Seitenansicht des erfindungsgemäßen thermischen Durchflussmessgerätes mit der Schutzhülse der Fig. 1; und
- Fig. 3:: geschnittene Detailansicht des thermischen Durchflussmessgerätes der Fig. 1 mit einem Teilausschnitt X in einem Verbindungsbereich.

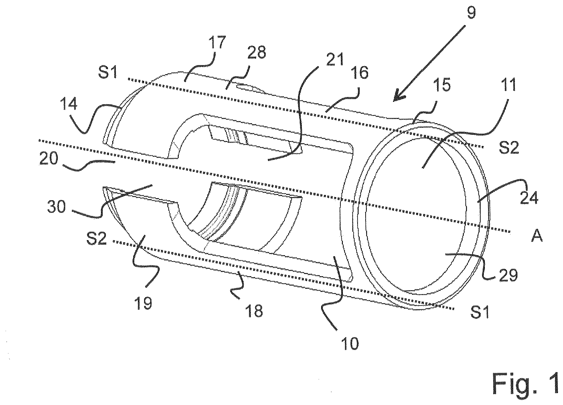

Fig. 1 bis Fig. 3 zeigen eine Ausführungsvariante eines thermischen Durchflussmessgeräts 1, mit welchem ein Durchfluss, insbesondere ein Massedurchfluss, eines durch ein Rohr strömenden Mediums bestimmbar ist.

Das thermische Durchflussmessgerät weist einen Messaufnehmer 2 zur Bestimmung eines Messwertes durch Messung des Mediums auf und einen Messumformer 3 zur Umwandlung des Messwertes in einen Durchfluss oder in eine Angabe eines Durchflusses oder einer Strömungsgeschwindigkeit. Das thermische Durchflussmessgerät 1 weist eine Längsachse auf. Der Messaufnehmer 2 und der Messumformer 3 sind durch ein rohrförmiges Verbindungselement 4 miteinander verbunden, z.B. verschweißt. Das Verbindungselement kann dabei der thermischen Entkopplung des Messumformers 3 gegenüber dem Messaufnehmer 2 dienen und kann zudem nicht näher dargestellte Energie und Datenleitungen zwischen dem Messaufnehmer 2 und dem Messumformer 3 schützen.

Der Messaufnehmer 2 weist zumindest ein erstes und ein zweites Sensorelement 7,8 auf. Jedes der beiden Sensorelemente 7,8 umfasst eine metallische Stifthülse und einen darin angeordneten Temperatursensor, insbesondere ein Widerstandsthermometer. Zumindest einer, vorzugsweise beide Temperatursensoren, können eine Heizvorrichtung aufweisen, daher sind die Temperatursensoren beheizbar.

Die zwei Sensorelemente 7,8 können vorzugsweise als möglichst gleichartig ausgestaltete Widerstandsthermometer ausgestaltet sein und in den stiftförmigen Metallhülsen, sogenannten Stingern, angeordnet sein. Somit sind die Temperatursensoren in thermischem Kontakt mit dem durch ein Messrohr oder durch die Rohrleitung strömenden Medium. Für die industrielle Anwendung ragen die Sensorelemente in das mediumsführende Rohr hinein. Der Messaufnehmer kann somit direkt in eine Rohrleitung montiert sein oder mit einem Messrohr, welches Teil des Durchflussmessgerätes ist, montiert sein. Zumindest eines der beiden Sensorelemente 7 oder 8 ist ein sogenanntes aktives Sensorelement, das in welchen das Widerstandsthermometer mittels einer dem Sensorelement zugeordneten Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten Sensorelement 7 oder 8 handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer der Sensorelemente einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für das beheizte Widerstandsthermometer erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers des Sensorelements 7 oder 8 notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten insbesondere zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

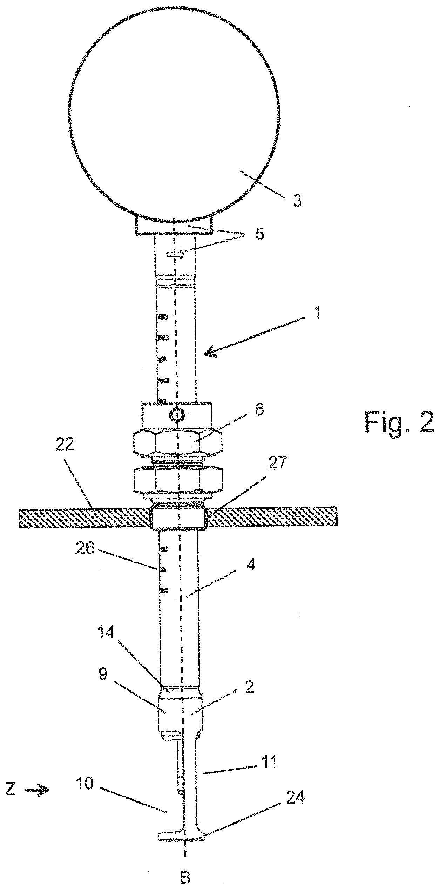

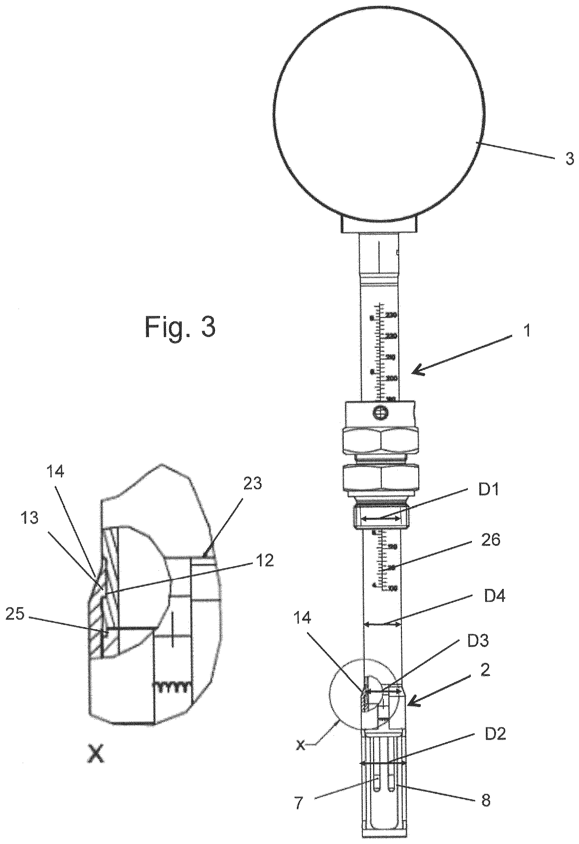

Das rohrförmige Verbindungselement 4 der Fig. 2 und 3 weist eine Skala 26 zur Bestimmung der Einstecktiefe des thermischen Durchflussmessgerätes 1 in ein Rohr 22 auf. Das rohrförmige Verbindungselement 4 weist eine Längsachse B auf, die auf der Längsachse des Thermischen Durchflussmessgerätes 1 liegt. An dem rohrförmigen Verbindungselement 4 ist ein ringförmiges Anschlusselement 6, vorzugweise ein Schraubanschluss, angeordnet, zur Anordnung des Verbindungselements 4 an einem Rohr 22, beispielsweise einem Messrohr des thermischen Durchflussmessgerätes. Das rohrförmige Verbindungselement 4 kann dabei einen gelöstem Zustand, in welchem es gegenüber einem Rohr 22 verschieblich gelagert ist, aufweisen und einen fixierten Zustand, in welchen es fest mit dem Rohr 22 verbunden ist. Von dem gelösten in den fixierten Zustand kann durch einen Kraft- und/oder Formenschluss oder durch eine radial im Anschlusselement 6 angeordnete Schraube z.B. eine Madenschraube, gewechselt werden. Das rohrförmige Verbindungselement 4 ist an einem Anschlussstutzen 5 mit dem Messumformer 3 verbunden. Der Anschlussstutzen 5 ist zylindrisch ausgebildet und weist einen größeren Durchmesser als das rohrförmige Verbindungselement 4 auf.

Die Sensorelemente 7,8 sind zum Schutz vor Beschädigungen mit einer Schutzhülse 9 umgeben. Die Schutzhülse 9 weist eine Längsachse A und einen Hülsenmantel 28 und zumindest eine, vorzugsweise zwei, endständige Öffnungen 29,30 auf.

Der Hülsenmantel 28 weist ebenfalls zwei Öffnungen 10, 11 auf. Eine endständige Öffnung 30 der Schutzhülse 9 dient der Aufnahme eines Endbereiches des rohrförmigen Verbindungselementes 6. Die Öffnungen 10,11 des Hülsenmantels 28 dienen der Leitung des Mediums durch die Schutzhülse 9 und entlang der beiden Sensorelemente 7,8. Der Hülsenmantel 28 weist ein umlaufendes, geschlossenes Ringsegment 15 als Vorsprung auf und zumindest zwei Schenkel 16,18 benachbart zu den Öffnungen 10,11. Das Ringsegment 15 ist vorzugsweise ein mediumseitiges, endständiges Segment der Schutzhülse 9. Jeder der Schenkel 16 oder 18 kann optional einen oder mehrere endständige, schalenförmige Endabschnitte 17 aufweisen. Die schalenförmigen Endabschnitte 17,19 weisen auf einer Querschnittsebene senkrecht zur Längsachse A der Schutzhülse 9 im Wesentlichen eine Kreisbogenform auf.

Selbstverständlich können auch ein Schenkel 16 oder 18 mehrere dieser schalenförmigen Endabschnitte 17 aufweisen oder ein Endabschnitt 17 oder 19 mehrere Schenkel aufweisen. Jeder Schenkel 16,18 weist eine Längsachse S1 oder S2 auf, welche parallel zur Längsachse A der Schutzhülse 9 verlaufen. Die Längsachse A der Schutzhülse 9 liegt im montierten Zustand auf der Längsachse B des thermischen Durchflussmessgerätes 1.

Die schalenförmigen Endabschnitte 17, 19 umgreifen das rohrförmige Verbindungselement 4. Um eine axiale Verschieblichkeit entlang des rohrförmigen Verbindungselementes 6 zu verhindern, weist die Schutzhülse 9 insbesondere im Bereich der schalenförmigen Endabschnitte17,19 oder an den Schenkeln 16,18 einen Vorsprung 13 auf, welcher von einer dem rohrförmigen Verbindungselementes 4 zugewandten Innenseite der Schutzhülse 9 hervorsteht. Dabei ragt der Vorsprung 13 radial in das Lumen der Schutzhülse 9 hinein.

Der Vorsprung 13 kann punktuell oder besonders bevorzugt in Form eines bogenförmigen Ringsegments ausgebildet sein. Um eine übermäßige Querschnittserweiterung der Schutzhülse 9 gegenüber dem rohrförmigen Verbindungselement 4 zu vermeiden, weist das Verbindungselement 4 zumindest zur teilweisen oder vollständigen Aufnahme des Vorsprungs 13 eine oder mehrere vorzugsweise umlaufende Vertiefungen 25 auf. Die Vertiefung 25 kann als fertigungstechnisch einfach realisierbare Ringnut umlaufend in eine Wandung des rohrförmigen Verbindungselementes 4 ausgebildet sein. Es können auch für eine Variable Positionierung der Schutzhülse 9 entlang der Längsachse B des thermischen Durchflussmessgerätes 1 mehrere Vertiefungen 25, 12, insbesondere Ringnuten, voneinander beabstandet in der Wandung des Verbindungselementes 4 angeordnet sein.

Die Verbindung des Vorsprungs mit der Vertiefung ist eine formschlüssige Verbindung und kann bei Vorliegen einer Fehlerwirkung bzw. einer Rückstellkraft der Schenkel 16, 18 zusätzlich auch eine kraftschlüssige Verbindung sein.

Die Schenkel 16,18 und die Endabschnitte 17, 19 können ohne Vorliegen einer stoffschlüssigen Verbindung zwischen dem rohrförmigen Element 4 und/oder der Schutzhülse 9 in begrenztem Maße in radialer Richtung zueinander beweglich sein, sodass eine Aufspreizung der Schenkel 16, 19 bei der Installation erfolgen kann und die Schutzhülse 9 somit auf das Verbindungselement 4 und den Messaufnehmer 2 durch die Öffnung 30 aufsteckbar und gegebenenfalls anschließend stoffschlüssig z.B. durch Schweißen und Löten fixierbar ist.

Zwischen den schalenförmigen Endabschnitten 17,19 sind dabei zumindest ein Schlitz, vorzugsweise zwei Schlitze 20,21 in dem Hülsenmantel 28 vorgesehen, welche in Fig. 1 bis Fig. 3 einen parallelen Verlauf zur Längsachse A der Schutzhülse 9 aufweisen. Die Schutzhülse 9 kann sodann zusätzlich zur formschlüssigen Verbindung stoffschlüssig durch Schweißpunkte 23 an dem Verbindungselement 4 fixiert werden. Diese Form der mechanischen, insbesondere formschlüssigen Verbindung hat unter Anderem den Vorteil, dass die Fixierung der Schutzhülse 9 nicht zu einer Materialveränderung und einen Wärmeeintrag durch Schweißen in der Nähe der Sensorelemente 7,8, führt und eine rein mechanische Verbindung oder eine mechanische Verbindung gegebenenfalls unterstützt mit wenigen Schweißpunkten zur Festlegung der Schutzhülse 9 am restlichen thermischen Durchflussmessgerät 1 ausreicht. Weiterhin kann die Installation im Herstellungsprozess sehr schnell erfolgen, was Vorteile bei der Produktionsgeschwindigkeit mit sich bringt. Als weitere Möglichkeit einer mechanischen Fixierung einer Schutzhülse 9 an einem Verbindungselement kann im Rahmen eines weiteren Ausführungsbeispiels der vorliegenden Erfindung anstelle des Vorsprungs 13 und der Ringnut 25 eine Bajonett-Verbindung realisiert werden, welche ebenfalls eine Vertiefung und einen Vorsprung aufweist. Weiterhin kann die mechanische Verbindung auch durch eine Verschraubung erreicht werden, wobei herfür eine größere Wandstärke sowohl der Sensorhülse als auch des rohrförmigen Verbindungselementes 4 benötigt wird.

Die in Fig.1 bis Fig. 3 dargestellte mechanische Verbindung zwischen der Schutzhülse und dem restlichen thermischen Durchflussmessgerät kann auch durch eine mechanische Umkehr erreicht werden, so kann in der Schutzhülse 9 eine Vertiefung und am rohrförmigen Verbindungselement 4 ein radialer Vorsprung ausgebildet sein.

Die Schutzhülse 9 kann vorteilhaft monolithisch ausgebildet sein oder mehrteilig, beispielsweise durch Verbindung zweier Halbschalen. Die Verbindung der Halbschalen kann sowohl stoffschlüssig als auch rein mechanisch oder als Kombination dieser beiden Verbindungsvarianten erfolgen.

Die Schutzhülse bzw. Sensorhülse 9 weist einen Außendurchmesser D2 z.B. im Bereich der schalenförmigen Endabschnitte17,19 auf, welcher größer ist, als ein Innendurchmesser D1 des ringförmigen Anschlusselementes 6. Ein sensorseitiger Endbereich 14 der Schutzhülse 9 weist eine Verringerung des Außendurchmessers D2 der Sensorhülse 9 auf. Diese Verringerung erfolgt in Form einer sogenannten Fase. Dieser abgefaste Endbereich 14 ermöglicht ein Auflaufen des Anschlusselementes 6 im Fall eines Herausdrückens oder Herausschießens des Messaufnehmer 2 in radialer Richtung zum Rohr 22, in welchem das thermische Durchflussmessgerät 1, insbesondere in einer Rohröffnung 27, festgelegt ist. Die Verbindung zwischen der Sensorhülse 9 und dem Verbindungselement 4 kann insbesondere rastend erfolgen. Das ringförmige Anschlusselement 6 kann als Prozessanschlussadapter mit einer Mutter mit Außengewinde ausgebildet sein, wobei der Prozessanschlussadapter an dem Rohr 22 einer Rohrleitung festgelegt ist. Das Rohr 22 kann vorteilhaft ein Messrohr sein, welches dem thermischen Durchflussmessgerät 1 zugeordnet ist, oder es kann ein konventionelles Rohr einer Rohrleitung sein. Die Mutter mit Außengewinde kann mit dem Prozessanschlussadapter z.B. als Schraubverbindung gekoppelt sein.

Die Öffnungen 10,11 in dem Hülsenmantel 28 dienen der Einleitung und Ableitung des Mediums in Strömungsrichtung Z und der Strömungskonditionierung für das Umströmen der Sensorelemente 7,9. Dabei sind die Öffnungen bevorzugt in das Hülsenmaterial des Hülsenmantels 28 eingefräst. Das Hülsenmaterial kann vorteilshaft aus Stahl, insbesondere rostfreiem Stahl, aus Kunststoff, insbesondere aus PEEK, oder aus Titan gefertigt sein. Die vorzugsweise als Ringnut ausgebildete Vertiefung 25 kann vorteilhaft zwischen 0,3 bis 1,5 mm betragen. Der Innendurchmesser D1 des Anschlusselements beträgt vorteilhaft zumindest 70% des Außendurchmessers der Sensorhülse 9, vorzugsweise zwischen 75% bis 95% des Außendurchmessers D2 der Sensorhülse 9. Der Innendurchmesser D1 des Anschlusselements 6 kann zudem zumindest 0,2 mm größer sein, als der Außendurchmesser des rohrförmigen Verbindungselements 4, um so ein leichtgängiges Verschieben im gelösten Zustand zu ermöglichen. Die Sensorhülse 9, insbesondere der Hülsenmantel 28 weist zudem einen Innendurchmesser D3 auf, welcher kleiner ist als der Außendurchmesser D4 des rohrförmigen Verbindungselements 4 und/oder des Messaufnehmers 2.

Zur Herstellung des in Fig. 1 dargestellten erfindungsgemäßem thermischen Durchflussmessgerätes1 kann zumindest der Messaufnehmer 2, das Verbindungselement 4 und der Anschlussstutzen 5 miteinander, beispielswiese durch Schweißen, verbunden werden.

Sodann erfolgt in einem zweiten Schritt das ein Aufschieben des ringförmigen Anschlusselementes 6 auf das Verbindungselement 4 von einem messaufnehmerseitigen Ende des thermischen Durchflussmessgerätes 1 her.

Schließlich kann in einem dritten Schritt die Schutzhülse 9 auf den Messaufnehmer 2 und das Verbindungselement 4 aufgesteckt und mit der Ringnut des Verbindungselementes 4 zu einem Formenschluss gebracht werden.

Zusätzlich kann ein stoffschlüssiges, punktuelles Verschweißen der Schutzhülse 9 mit dem Verbindungselement 4 erfolgen.

Bei der Montage wird somit zuerst das Anschlusselement 6 sensorseitig über das rohrförmige Verbindungselement 4 geschoben. Danach wird die Schutzhülse 9 montiert.

Die Schutzhülse 9 klemmt sich dabei in der Ringnut am Verbindungselement 4 fest. Fixiert kann die Schutzhülse 9 mit dem Verbindungselement 4 durch mehrere Schweißpunkte werden.

Die Schutzhülse 9 kann aus einem Rohr, z.B. durch mechanische Bearbeitung oder durch Laserschneiden, hergestellt werden. An einem Ende ist sie geschlitzt, sodass sie dort flexibel wird. Dadurch kann die Schutzhülse 9 durch Aufweiten über den Messaufnehmer 2 geschoben werden, wo sie schließlich in der Ringnut einrastet. Im Wesentlich handelt es sich dabei um eine Schnappverbindung. Die hohen Kräfte beim Ausschießen des thermischen Durchflussmessgerätes 1, welche auf die Schutzhülse 9 treffen, bewirken, dass die Schutzhülse 9 sich dort festklemmt.

Alternativ kann die Schutzhülse 9 auch mehrteilig ausgebildet sein, so ist es möglich, dass die Schutzhülse9 komplett geschlitzt und in zwei Teile zerlegbar ist, wobei diese Teile über den Messumformer gelegt werden können und durch eine Schelle miteinander verbunden werden kann. Anschließend wird die Schutzhülse 9 auch in dieser Variante durch Schweißpunkte fixiert. Die Schutzhülse 9 des thermischen Durchflussmessgerätes 1 dient somit dem Schutz der Sensorelemente dieses Gerätes.

Sie ist das Endstück des rohrförmigen Verbindungselementes, welches in das durchströmende Medium ragt und umhüllt den Messaufnehmer, insbesondere die Sensorelemente 7,8 teilweise. Durch den vorangegangenen Formenschluss wird zudem eine Fixierung der Schutzhülse 9 in axialer Richtung erreicht.

### Bezugszeichenliste

- 1: thermisches Durchflussmessgerät
- 2: Messaufnehmer
- 3: Messumformer
- 4: rohrförmiges Verbindungselement
- 5: Anschlussstutzen
- 6: ringförmiges Anschlusselement
- 7: erstes Sensorelement
- 8: zweites Sensorelement
- 9: Schutzhülse
- 10: erste Öffnung
- 11: zweite Öffnung
- 12: Vertiefung
- 13: Vorsprung
- 14: sensorseitiger Endbereich
- 15: Ringsegment
- 16: erster Schenkel
- 17: erster schalenförmiger Endabschnitt
- 18: zweiter Schenkel
- 19: zweiter schalenförmiger Endabschnitt
- 20: erster Schlitz
- 21: zweiter Schlitz
- 22: Rohr, z.B. Messrohr
- 23: Schweißpunkt
- 24: mediumsseitiger Endbereich
- 25: Vertiefung
- 26: Skala
- 27: Rohröffnung
- 28: Hülsenmantel
- 29: endständige Öffnung
- 30: endständige Öffnung

- A: Längsachse Schutzhülse
- B: Längsachse rohrförmiges Verbindungselement
- Z: Strömungsrichtung Medium
- S1: Längsachse Schenkel
- S2: Längsachse Schenkel

## Patentansprüche

1. Thermisches Durchflussmessgerät (1) umfassend
zumindest einen Messaufnehmer (2) mit zumindest einem Sensorelement (7 oder 8) zur Ermittlung eines Messwertes zur Ermittlung des Durchflusses eines Mediums; einen Messumformer (3) zur Ermittlung des Durchflusses anhand des ermittelten Messwertes;
ein rohrförmiges Verbindungselement (4) zur Verbindung des Messaufnehmers (2) mit dem Messumformer (3);
wobei eine Schutzhülse (9) vorgesehen ist, welche mit dem rohrförmigen Verbindungselement (4) mechanisch verbunden ist,
wobei die Schutzhülle (9) einen Hülsenmantel (28) mit mindestens zwei Öffnungen (10, 11), einer Einströmöffnung, durch welche das Medium dem Messaufnehmer (2) zuleitbar ist und eine Abströmöffnung, durch welche das Medium von dem Messaufnehmer (2) ableitbar ist,
wobei die Verbindung zwischen der Schutzhülse (9) und dem rohrförmigen Verbindungselement (4) eine zumindest bereichsweise formschlüssige Verbindung ist,
wobei dieSchutzhülse (9) bereichsweise ein umlaufendes Ringsegment (15) aufweist, wobei die Schutzhülse (9) ausgehend von dem umlaufenden Ringsegment (15) zumindest zwei Schenkel (16, 18) aufweist,
wobei jeder der Schenkel (16, 18) eine Längsachse (S1, S2) aufweist, die parallel zu einer Längsachse (A) der Schutzhülse (9) verlaufen,
**dadurch gekennzeichnet, dass** jeder der Schenkel (16, 18) einen schalenförmigen Endabschnitt (17, 19) aufweist und
dass die Endabschnitte durch parallel zur Längsachse (A) verlaufende Schlitze (20, 21) voneinander getrennt sind.

2. Thermisches Durchflussmessgerät nach Anspruch 1, **dadurch gekennzeichnet, dass** die Sensorhülse (9) zumindest im Bereich der formschlüssigen Verbindung einen Innendurchmesser (D3) aufweist, der kleiner ist als der Außendurchmesser (D4) des rohrförmiges Verbindungselements (4).

3. Thermisches Durchflussmessgerät nach Anspruch 1 oder 2, **dadurch gekennzeichnet, dass** das umlaufende Ringsegment (15) endständig angeordnet ist.

4. Thermisches Durchflussmessgerät nach einem der vorhergehenden Ansprüche, **dadurch gekennzeichnet, dass** die Schutzhülse (9) und das rohrförmige Verbindungselement (4) zwei, insbesondere unmittelbar, miteinander mechanische verbundene Bauteile sind.

5. Thermisches Durchflussmessgerät nach einem der vorhergehenden Ansprüche, **dadurch gekennzeichnet, dass** ein erstes der Bauteile eine Vertiefung oder Ausnehmung aufweist und dass ein zweites der Bauteile einen Vorsprung aufweist, wobei die Verbindung der beiden Bauteile durch Eingriff des Vorsprunges in die Vertiefung erfolgt, derart, dass eine axiale Fixierung der Schutzhülse (9) entlang einer Längsachse (B) des rohrförmigen Verbindungselements (4) erfolgt.

6. Thermisches Durchflussmessgerät nach einem der vorhergehenden Ansprüche, **dadurch gekennzeichnet, dass** das rohrförmige Verbindungselement (4) des Thermischen Durchflussmessgeräts (1) ein ringförmiges Anschlusselement (6) zur Befestigung, insbesondere mediendichten Befestigung, des Thermisches Durchflussmessgerät (1) an einer Rohrwand eines Rohres (22) aufweist, wobei Außendurchmesser (D2) der Schutzhülse (9) größer ist als der Innendurchmesser (D1) des Anschlusselementes (6).

7. Thermisches Durchflussmessgerät nach einem der vorhergehenden Ansprüche, **dadurch gekennzeichnet, dass** das ringförmige Anschluss-element (6) in einem gelösten Zustand eine axiale Verschieblichkeit des rohrförmigen Verbindungselements (4) gegenüber dem Rohr (22) entlang einer Längsachse (B) des rohrförmigen Verbindungselementes (4) ermöglicht.

8. Thermisches Durchflussmessgerät nach einem der vorhergehenden Ansprüche, **dadurch gekennzeichnet, dass** die Schutzhülse (9) in einem endständigen Bereich abgefast ist.

9. Thermisches Durchflussmessgerät nach einem der vorhergehenden Ansprüche, **dadurch gekennzeichnet, dass** die Schutzhülse (9) aus Metall, vorzugsweise aus Titan und/oder Stahl, insbesondere rostfreiem Stahl, oder aus Kunststoff, insbesondere aus PEEK, gebildet ist.

## Claims

1. Thermal flowmeter (1) comprising
at least a sensor (2) with at least a sensor element (7 or 8) designed to determine a measured value for determining the flow of a medium;
a transmitter (3) designed to determine the flow using the determined measured value;
a tubular connection element (4) designed to connect the sensor (2) to the transmitter (3);
wherein a protective sleeve (9) is provided, wherein said sleeve is mechanically connected to the tubular connection element (4),
wherein the protective sleeve (9) has a sleeve jacket (28) with at least two openings (10, 11), a flow entry opening through which the medium can be routed to the sensor (2) and a flow outlet opening through which the medium can be directed from the sensor (2),
wherein the connection between the protective sleeve (9) and the tubular connection element (4) is a positive-locking connection at least in parts, wherein the protective sleeve (9) has a peripheral ring segment (15) in sections, wherein, starting from the peripheral ring segment (15), the protective sleeve (9) has at least two legs (16, 18),
wherein each of the legs (16, 18) has a longitudinal axis (S1, S2), wherein the legs are parallel to a longitudinal axis (A) of the protective sleeve (9),
**characterized in that** each of the legs (16, 18) has a shell-shaped end section (17, 19) and
**in that** the end sections are separated from one another by slots (20, 21) running parallel to the longitudinal axis (A).

2. Thermal flowmeter as claimed in Claim 1, **characterized in that** the sensor sleeve (9) has - at least in the area of the positive-locking connection - an inner diameter (D3) which is smaller than the outer diameter (D4) of the tubular connection element (4).

3. Thermal flowmeter as claimed in Claim 1 or 2, **characterized in that** the peripheral ring segment (15) is arranged at the end.

4. Thermal flowmeter as claimed in one of the previous claims, **characterized in that** the protective sleeve (9) and the tubular connection element (4) are two components that are interconnected mechanically, particularly directly.

5. Thermal flowmeter as claimed in one of the previous claims, **characterized in that** a first of the components has a recess or cavity and that a second of the components has a projection, wherein the connection of the two components is established by the projection engaging in the recess in such a way as to axially fix the protective sleeve (9) along a longitudinal axis (B) of the tubular connection element (4).

6. Thermal flowmeter as claimed in one of the previous claims, **characterized in that** the tubular connection element (4) of the thermal flowmeter (1) has an annular connection element (6) for securing, particularly securing in a medium-tight manner, the thermal flowmeter (1) on a wall of a tube (22), wherein the outer diameter (D2) of the protective sleeve (9) is greater than the inner diameter (D1) of the connection element (6).

7. Thermal flowmeter as claimed in one of the previous claims, **characterized in that** - in a released state - the annular connection element (6) allows an axial displacement of the tubular connection element (4) in relation to the tube (22) along a longitudinal axis (B) of the tubular connection element (4).

8. Thermal flowmeter as claimed in one of the previous claims, **characterized in that** the protective sleeve (9) is chamfered in an end section.

9. Thermal flowmeter as claimed in one of the previous claims, **characterized in that** the protective sleeve (9) is made of metal, preferably titanium and/or steel, particularly stainless steel, or from plastic, particularly PEEK.

## Revendications

1. Débitmètre thermique (1) comprenant
au moins un capteur (2) avec au moins un élément capteur (7 ou 8) destiné à déterminer une valeur mesurée en vue de la détermination du débit d'un produit ; un transmetteur (3) destiné à déterminer le débit à l'aide de la valeur mesurée déterminée ;
un élément de liaison tubulaire (4) destiné à relier le capteur (2) au transmetteur (3) ;
une douille de protection (9) étant prévue, laquelle douille est reliée mécaniquement à l'élément de liaison tubulaire (4),
la douille de protection (9) comportant une enveloppe de douille (28) avec au moins deux ouvertures (10, 11), une ouverture d'entrée par laquelle le produit peut être amené au capteur (2) et une ouverture de sortie par laquelle le produit peut être évacué du capteur (2),
la liaison entre la douille de protection (9) et l'élément de liaison tubulaire (4) étant une liaison par complémentarité de formes au moins par zones,
la douille de protection (9) présentant par zones un segment annulaire périphérique (15),
la douille de protection (9) présentant, en partant du segment annulaire périphérique (15), au moins deux branches (16, 18),
chacune des branches (16, 18) présentant un axe longitudinal (S1, S2), lesquels axes s'étendent parallèlement à un axe longitudinal (A) de la douille de protection (9),
**caractérisé en ce que** chacune des branches (16, 18) présente une section d'extrémité (17, 19) en forme de coque et
**en ce que** les sections d'extrémité sont séparées les unes des autres par des fentes (20, 21) s'étendant parallèlement à l'axe longitudinal (A).

2. Débitmètre thermique selon la revendication 1, **caractérisé en ce que** la douille de capteur (9) présente, au moins dans la zone de la liaison par complémentarité de formes, un diamètre intérieur (D3) qui est inférieur au diamètre extérieur (D4) de l'élément de liaison tubulaire (4).

3. Débitmètre thermique selon la revendication 1 ou 2, **caractérisé en ce que** le segment annulaire périphérique (15) est disposé à l'extrémité.

4. Débitmètre thermique selon l'une des revendications précédentes, **caractérisé en ce que** la douille de protection (9) et l'élément de liaison tubulaire (4) sont deux composants reliés mécaniquement entre eux, notamment directement.

5. Débitmètre thermique selon l'une des revendications précédentes, **caractérisé en ce qu'**un premier desdits composants comporte une cavité ou un évidement et **en ce qu'**un second desdits composants comporte une saillie, la liaison des deux composants étant réalisée par engagement de la saillie dans la cavité de manière à réaliser une fixation axiale de la douille de protection (9) selon un axe longitudinal (B) de l'élément de liaison tubulaire (4).

6. Débitmètre thermique selon l'une des revendications précédentes, **caractérisé en ce que** l'élément de liaison tubulaire (4) du débitmètre thermique (1) présente un élément de liaison annulaire (6) pour la fixation, notamment la fixation étanche au produit, du débitmètre thermique (1) sur une paroi d'un tube (22), le diamètre extérieur (D2) de la douille de protection (9) étant supérieur au diamètre intérieur (D1) de l'élément de liaison (6).

7. Débitmètre thermique selon l'une des revendications précédentes, **caractérisé en ce que** l'élément de liaison annulaire (6) permet, dans un état desserré, un déplacement axial de l'élément de liaison tubulaire (4) par rapport au tube (22) le long d'un axe longitudinal (B) de l'élément de liaison tubulaire (4).

8. Débitmètre thermique selon l'une des revendications précédentes, **caractérisé en ce que** la douille de protection (9) est chanfreinée dans une zone d'extrémité.

9. Débitmètre thermique selon l'une des revendications précédentes, **caractérisé en ce que** la douille de protection (9) est formée de métal, de préférence de titane et/ou d'acier, notamment d'acier inoxydable, ou de matière plastique, notamment de PEEK.
